(19) Europäisches Patentamt
European Patent Office
Office européen des brevets

(11) **EP 4 460 074 A1**

(12) **EUROPEAN PATENT APPLICATION**

(43) Date of publication:
**06.11.2024 Bulletin 2024/45**

(21) Application number: **23315157.0**

(22) Date of filing: **04.05.2023**

(51) International Patent Classification (IPC):
*H04W 24/02* (2009.01)    *H04W 24/08* (2009.01)
*H04W 28/02* (2009.01)    *H04W 72/02* (2009.01)
*H04W 72/52* (2023.01)    *H04W 76/14* (2018.01)
*H04W 76/23* (2018.01)

(52) Cooperative Patent Classification (CPC):
**H04W 24/02; G06N 3/0895; G06N 3/098;
G06N 20/00; H04W 28/0289; H04W 76/23;**
H04L 47/11; H04L 47/12; H04L 47/127;
H04W 24/08; H04W 72/02; H04W 72/52

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.
1119 NS  Schiphol Rijk Amsterdam (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventor: **Li, Qianrui
35708 RENNES CÉDEX 7 (FR)**

(74) Representative: **Plasseraud IP
104 Rue de Richelieu
CS92104
75080 Paris Cedex 02 (FR)**

(54) **METHOD AND SYSTEM FOR CONFIGURING LOOK-UP TABLE FOR DECENTRALIZED CONGESTION CONTROL, DECENTRALIZED CONGESTION CONTROL METHOD USING SUCH A LOOK-UP TABLE**

(57)    The invention relates to a method for configuring a look-up table for decentralized congestion control (DCC) of a network comprising a road side unit (RSU) and a plurality of transmitter user equipments (TX UEs) capable of communicating with the RSU and using the look-up table to implement decentralize congestion control for sidelink communication of the TX UEs, comprising:
- monitoring sidelink traffic conditions in the vicinity of the RSU;
- training a machine learning model; and
- dynamically configuring the look-up table for a targeted TX UE in the TX UEs based on the monitored sidelink traffic conditions and the trained machine learning model.
    The invention improves the decentralized congestion control.

Fig. 2a

**EP 4 460 074 A1**

**Description**

FIELD OF INVENTION

The present invention relates to decentralized congestion control in a network especially the one using sidelink communication technology. In particular, the present invention relates to a method and a system for method and system for configuring a look-up table for decentralized congestion control.

BACKGROUND

In future intelligent transport systems, a wide variety of dedicated applications are envisioned. These applications will rely on both vehicle/train-to-infrastructure (V2I/T2I) and vehicle-to-vehicle/train-to-train (V2V/T2T) links to convey data packets. Currently, there are several data traffic types that exist in LTE V2X, including conventional broadcast safety messages (BSMs) and cooperative aware messages (CAMs). However, new V2X application messages are on the rise, such as data traffic for autonomous driving, remote driving, vehicle platooning, and autonomous valet parking. As these technologies become more sophisticated, they will require more advanced communication systems to function effectively.

One promising candidate for both V2I/T2I and V2V/T2T communications is sidelink communication technology. This technology is particularly well-suited to distributed communication scenarios, and can provide excellent performance when used in this way. In fact, it is believed that sidelink communication technology will play a crucial role in facilitating the development of future intelligent transport systems.

However, despite the many benefits of sidelink communication technology, there are still several challenges that must be overcome before it can be widely adopted. For example, it is necessary to find ways to optimize the performance of sidelink communication systems in complex urban environments, where there are many competing wireless signals. Additionally, there are concerns about the security of sidelink communication technology, and researchers must work to develop secure communication protocols that can prevent unauthorized access to sensitive data.

Despite these challenges, the potential benefits of sidelink communication technology are too great to ignore. As the development of intelligent transport systems continues, sidelink technology will play an increasingly important role in facilitating the safe and efficient operation of these systems.

Among other things, in the sidelink communication, congestion control is a crucial mechanism that maintains the proper functioning of the network. It regulates the entry of data packets into the network and manages shared resources effectively and fairly to avoid congestive collapse. A Decentralized Congestion Control (DCC) scheme can be used, for example in 5G NR V2X mode 2, which provides a more decentralized approach to congestion control.

Instead of defining a specific congestion control algorithm, the DCC scheme defines related metrics and possible countermeasures to reduce channel congestion in the standard. The two key metrics that each transmitter user equipment (TX UE) in the DCC scheme will measure and calculate are the sidelink Channel Busy Ratio (CBR) and the sidelink Channel Occupancy Ratio (CR). These metrics are critical in determining the current state of the network and identifying areas of congestion that need to be addressed.

To ensure that each TX UE operates within acceptable limits, a predefined look-up table (pre-)configuration signaling is used to indicate the maximal channel occupancy ratio ($CR_{limit}$) that a TX UE can have for a given range of CBR. Based on the measured CBR, each TX UE can obtain the corresponding $CR_{limit}$ from the look-up table (pre-)configuration signaling and then compare the measured CR with the $CR_{limit}$.

If the measured CR surpasses the $CR_{limit}$, an implementation-specific DCC action should be taken to reduce the CR. This action can include packet dropping or modifying transmitting parameters such as TX power, modulation coding scheme (MCS), or number of transmissions per resource reservation interval. By taking these proactive measures, the DCC scheme can ensure that the network remains stable and functioning properly, even during periods of high traffic or congestion.

The DCC scheme using the (pre-)configured look-up table in the art is discussed in greater detail below.

In 5G NR V2X mode 2, a Decentralized Congestion Control (DCC) scheme is applied to regulate the entry of data packets into the network and manage shared resources in an effective and fair manner to avoid congestive collapse. The method is called decentralized because each TX UE manages its congestion control solely based on three factors: (1) its own observation of the sidelink channel status (sidelink CBR measure and CR measure), (2) a (pre-)configured look-up table at this TX UE indicating if some actions should be taken if the observed measurements belong to a certain condition, and (3) implementation-specific DCC actions that can reduce congestion status at this TX UE.

The (pre-)configured look-up table defines multiple CBR ranges and the associated $CR_{limit}$ value. If the TX UE observes a CBR measure which falls into the said CBR range, its CR measure is not supposed to surpass the associate $CR_{limit}$ value. If CR measure $\leq CR_{limit}$, the TX UE will not consider that the system is in a congested status and there is no DCC action required. If CR measure $> CR_{limit}$, it indicates that there is potential congestion in the system, and the

2

TX UE should take a DCC action to reduce its sidelink channel utilization. The look-up table can be multi-dimensional to take into account other parameters such as the priority of the packet. In this case, for each priority level, the CBR ranges and the associated CR$_{limit}$ value is defined.

The standardization body ETSI has currently specified the look-up table for the 802.11p and LTE-V2X DCC mechanism [ETSI TR 101 612, ETSI TS 103 574]. This means that the table's structure, how it is organized, and how it will be used have been (pre)determined. The look-up table can also be defined for each traffic priority, examples of the look-up table proposed in the harmonized specification in 802.11p and LTE in ETSI or 3GPP can be found in [ETSI TS 103 574]. For NR V2X sidelink, it has been agreed in 3GPP that the look-up table will have maximal 16 rows [TS 38.211] and the values in the look-up table have not yet been specified. In ETSI there is some discussion about extending and validating the LTE V2X look-up table in NR V2X case, however, the conclusion has not yet been drawn. The look-up table can be preconfigured, i.e., the values can be written in a memory at each TX UE in advance (by the chipset maker or the vehicle maker). It can also be configured via a Uu link signaling when the TX UE is in the coverage of a BS.

The above standardization compatible DCC look-up table (pre-)configuration has the following drawbacks, especially when the NR V2X sidelink communication is considered.

First, the look-up table in the art is rigid and can easily be obsolete in time. The look-up table proposed in the harmonized specification in ETSI and 3GPP is based on system-level simulation with simple and non-heterogenous traffics. Due to limited applications and QoS requirements, such assumptions are reasonable for 802.11p and LTE-V2X systems. However, for NR V2X system, there are various applications with different related QoS constraints. For example, there is a limited set of Resource Reservation Interval (RRI) values for LTE V2X, i.e., 20 ms, 50 ms, 100 ms, or any multiple of 100 ms up to a maximum value of 1000 ms. However, in NR V2X, any RRI values between 1-100ms are also possible. Due to the potential high heterogeneity of traffic in an NR V2X sidelink communication system, a look-up table that is constructed from a simple and plain traffic assumption cannot capture the system behavior and therefore can lead to overall DCC performance degradation.

Second, the decentralized nature of the DCC mechanism leads to a local measurement-based congestion control decision, which cannot consider the congestion status of other users and make a global optimal decision. The DCC algorithm tries to restrain the channel utilization of each TX node under a (pre-configured threshold and tries to promote fair channel access among all TXs. Due to the decentralized nature, this mechanism is like a gentleman's agreement, which should work well if everyone is more or less in similar conditions and makes the same decision. However, if the congestion condition among TXs is non-uniformly distributed due to a local perturbation, such a mechanism can lead to an unfair channel utilization and degradation of overall DCC performance.

Finally, the DCC mechanism is a closed-loop system, the implementation-specific DCC actions will have an impact on the traffic characteristics and therefore the optimal threshold defined by the look-up-table (pre-)configuration should be adapted according to the shift of the traffic distribution. As mentioned before, all implementation-specific DCC actions such as packet dropping and TX parameter modification including but not limited to TX power modification, modulation coding scheme (MCS) modification, and the number of transmissions per RRI modification will in return modify the overall traffic characteristics. Therefore, an optimal look-up table should always update the thresholds which match the current traffic distribution. This cannot be achieved by a rigid (pre-) configuration-based look-up table.

For better understanding the DCC using the look up table in the art, the DCC look-up table construction in conventional 802.11p and LTE V2X system is now discussed.

In particular, the DCC look-up table proposed in the harmonized specification in ETSI or LTE V2X is based on system-level simulation. For a predefined deployment scenario (e.g., urban, freeway scenario), the physical layer simulation parameters and simple and homogeneous traffics are assumed. In order to guarantee that a targeted TX UE has a fair sidelink channel utilization, the idea of DCC is then to limit the channel utilization by each UE to a maximum allowed limit of the ratio of total radio resources that can be used in a given geographical area. One way to do it is to split the maximum allowed fraction of busy radio resources among the TX UEs in the given geographical area. The limit of the channel resource utilization ($CR_{limit}$) is then assumed to be approximated by:

$$CR_{limit} = \frac{CBR_{measured}}{N_{neigbor}} \quad \text{(Eq.1)}$$

Where $N_{neigbor}$ is the active transmitting TX UEs in the neighborhood of the targeted TX UE. Ideally, if the traffic characteristics is the same at each TX UE and everyone applies the same rule, the per TX UE channel utilization is then limited and the system congestion level is restrained. Therefore, the accuracy of a DCC algorithm lies on the fact that whether the $N_{neigbor}$ of a targeted TX UE can be correctly estimated or not. The number of neighbor UEs is of course not measurable by the targeted TX UE itself. In ETSI specification [ETSI TR 101 612], two different ways to estimate the number of neighbor UEs are listed: (1) count the number of entries in the network layer location table; (2) retrieve a specific function that describes the relation between the CBR measure and the $N_{neigbor}$. Based on the second method, it is only obtained by inverting the function with the measured *CBR* as observed by the UE, in another word, the $N_{neigbor}$ estimation is based on a system-level simulation to measure the sensitivity of the CBR measure as a function of the $N_{neigbor}$. In [Qualcomm R1-1611594], system-level simulation results have shown the *CBR measure* vs $N_{neigbor}$ relationship for 802.11p and LTE-V2X. According to the simulation curve, we can either assume a linear relation between *CBR measure* vs $N_{neigbor}$ and extract the slope and intercept of the linear function to construct the look-up table as for 802.11p case, or use a step function to estimate the $N_{neigbor}$ for each CBR measure range and the $CR_{limit}$ can be calculated using the equation above to obtain the look-up table as for the LTE V2X case.

However, in the NR V2X system, due to the first drawback of the DCC look-up table (pre-)configuration mentioned above, the traffic in NR V2X can be very heterogenous and a rigid (pre-)configured look-up table that is constructed from a simple and plain traffic assumption cannot capture the system behavior and therefore can lead to overall DCC performance degradation.

In the art, it has been proved that it is important to correctly identify the CBR measure vs $N_{neigbor}$ relationship. The problem of a DCC scheme is that with the CBR measure observed at each TX UE, it cannot deduce what consists of the heterogeneous traffics that leads to such level of channel busy ratio. Therefore, even if the average communication density (average system load) is exactly the same and the TX UE observes the same level of CBR measure, depending on the traffic mixture and the traffic parameters, the perception on the $N_{neigbor}$ given CBR measure can be quite different. As a result, the method in the art is likely to give incorrect neighbor TX UE estimation, which can lead to a miscalculation of the $CR_{limit}$ in the DCC look-up table, and which will then lead to a degradation of DCC performance.

Therefore, the (pre-)configured look-up-table-based DCC mechanism in the art mentioned above may not be the best solution for the NR V2X DCC mechanism due to various reasons. One of the main reasons is that the (pre-)configured look-up table may become outdated and inflexible over time. This can lead to suboptimal decision-making processes with respect to congestion control. Additionally, the (pre-configured look-up-table-based DCC mechanism only takes into account local measurement-based congestion control decisions, which may not be the most optimal for making globally beneficial decisions that can take into account the congestion status of other users. Another important factor to consider is that the DCC mechanism operates as a closed-loop system, which means that the specific DCC actions implemented can have a significant impact on traffic characteristics. Given this, it is crucial to adapt the optimal threshold defined by the (pre-)configured look-up table according to the shift of the traffic distribution.

In summary, while the (pre-)configured look-up-table-based DCC mechanism can be a useful tool in certain situations, it may not be the best option for the NR V2X DCC mechanism.

The invention aims to address these problems in the art to improve the overall system performance.

SUMMARY

In this regard, according to one aspect of the invention, it is provided a method for configuring a look-up table for decentralized congestion control (DCC) of a network comprising a road side unit (RSU) and a plurality of transmitter user equipments (TX UEs) capable of communicating with the RSU and using the look-up table to implement decentralize congestion control for sidelink communication of the TX UEs, comprising:

- monitoring sidelink traffic conditions in the vicinity of the RSU;

- training a machine learning model; and

- dynamically configuring the look-up table for a targeted TX UE in the TX UEs based on the monitored sidelink traffic conditions and the trained machine learning model.

With such an arrangement, it is now possible to dynamically configure the look-up table for decentralized congestion control in function of the real traffic conditions, so as to optimize the overall system performance.

Optionally, the sidelink communication is based on NR V2X sidelink mode 2.

According to one embodiment of the invention, the machine learning model is trained to estimate a number of TX UEs performing sidelink transmission in the neighborhood of the targeted TX UE, wherein the neighorhood is an area in which the targeted TX UE is adapted to communicate with other TX UEs through sidelink communication, and

the look-up table for the targeted TX UE is configured based a limit of Channel Resource utilization ($CR_{limit}$) calculated by the following equation (Eq. 1):

$$CR_{limit} = \frac{CBR_{measured}}{N_{neigbor}} \quad (Eq.1)$$

wherein $CBR_{measured}$ is a measured sidelink Channel Busy Ratio of the targeted TX UE, $N_{neigbor}$ is the number of TX UEs performing sidelink transmission in the neighborhood of the targeted TX UE.

With such an arrangement based on the limit of Channel Resource utilization for the look-up table configuration, a Decentralized Congestion Control (DCC) scheme based on pre-configured look-up table can be substantively improved with dynamic characteristics.

Moreover, optionally, the method according to the present invention further comprises:

- classifying the monitored sidelink traffic conditions into a plurality of traffic clusters, where each traffic cluster comprises a plurality of traffic with similar traffic characteristic attributes;

- generating synthetic data of TX UE preforming sidelink communication based on the plurality of traffic clusters; and

- training the machine learning model using the synthetic data as training data.

By clustering the sidelink traffic conditions, it is possible to accelerate the machine learning model training. However, the clustering is not a necessary step, and it is possible to skip the clustering step and train the model directly based on the traffic characteristics attributes, which mean there is no clustering step needed.

Optionally, the plurality of traffic clusters are classified by K-mean clustering or probabilistic clustering method, for example the expectation maximization clustering algorithm can be used to cluster traffic flows with similar characteristics for sidelink communication.

Optionally, the plurality of traffic clusters are classified according to following traffic characteristic attributes: Resource Reservation Interval (RRI), the number of (re-)transmission ($N_{transmission}$), and the number of sub-channels occupied for a transport block ($L_{subchannel}$).

Optionally, the synthetic data of TX UEs preforming sidelink communication comprise traffic cluster tuple for each TX UE that its traffic belongs to, wherein each traffic cluster tuple comprises Resource Reservation Interval (RRI), number of (retransmission ($N_{transmission}$), subchannel occupation for this TX UE for each reservation ($L_{subchannel}$), the probability (Pr) of the traffic type that this TX UE belongs to.

Optionally, the synthetic data comprise Channel Busy Ratio (CBR) of the targeted TX UE and the number of TX UEs performing sidelink transmission in the neighborhood of the targeted TX UE.

With these synthetic data as training data, it is possible to train the machine learning model in a more efficient and accurate manner.

Optionally, according to the present invention, these synthetic data are generated by a system level simulation, for example a digital twin of the real-world implementation.

Therefore, according to the present invention, the machine learning model (such as a neural network) trained at RSU will take sidelink traffic conditions monitored at the RSU (for example, the RRI, $N_{transmission}$, $L_{subchannel}$, and Pr for each traffic categories of the traffic) and the sidelink resource pool reservations monitored at each TX UE (for example, CBR measure for a predefined observation window) as input training data. The machine learning model will classify the traffics into different categories and provide as output the estimation relation of the CBR measurement as a function of the active transmitting neighborhood node number for each traffic category. With such information provided by RSU, each TX UE can estimate accurately the number of active transmitting UEs in its neighborhood and construct a dynamic look-up table that is suitable for the current traffic characteristics.

According to a second aspect of the invention, it is provided a method for configuring a look-up table for decentralized congestion control (DCC) of a network comprising at least two RSUs and, in the vicinity of each RSU, a plurality of TX UEs capable of communicating with respective RSU and using the look-up table to implement decentralize congestion control for sidelink communication of the TX UEs, and a parameter server (PS) connecting the RSUs. The method comprises:

- monitoring sidelink traffic conditions in the vicinity of each RSU;

- training a machine learning model for each RSU;

- aggregating the machine learning models by the parameter server;

- updating the machine learning models; and

- dynamically configuring a look-up table for a targeted TX UE in the TX UEs based on the monitored sidelink traffic conditions and the updated machine learning models.

By using such a federated learning scheme according to the present invention, traffic mixture discrepancies are considered in the federation procedure to make the distributed cooperation useful and efficient. In another word, the RSUs in the federated learning according to the present invention will consider different traffic mixture distributions at other RSUs and construct a personalized local update model to guarantee a positive transfer during the aggregation and parameter server model update.

Optionally, the step of updating the machine learning models is iterated until a predefined condition is met. For example, the predefined condition comprises:

- maximum iteration number,

- model convergence speed,

- maximum execution time, or

- model accuracy.

According to a third aspect of the invention, it is provided a system for configuring a look-up table for decentralized congestion control (DCC) of a network comprising at least two RSUs and, in the vicinity of each RSU, a plurality of TX UEs capable of communicating with respective RSU and using the look-up table to implement decentralize congestion control, and a parameter server (PS) connecting the RSUs,

wherein the RSUs are configured to:

- monitor sidelink traffic conditions in the vicinity of each RSU;

- train a machine learning model for each RSU;

wherein the parameter server is configured to:

- aggregate the machine learning models;

- update the machine learning models;

wherein the RSUs are further configured to:

- dynamically configure a look-up table for a targeted TX UE in the TX UEs based on the monitored sidelink traffic conditions and the updated machine learning models.

Such a system can dynamically configure a look-up table for optimization of decentralized congestion control.

According to a fourth aspect of the invention, it is provided a decentralized congestion control method for a network comprising at least one RSU and a plurality of TX UEs capable of communicating with each other through a sidelink communication, comprising:

- using the look-up table configured by methods as mentioned above to implement decentralize congestion control.

According to a fifth aspect of the invention, it is provided a computer program comprising instructions which, when the program is executed by a computer, cause the computer to carry out the methods as mentioned above.

Therefore, the present invention solves the drawbacks of the state-of-the-art (pre-)configuration look-up-table-based in the DCC mechanism by providing a more flexible and adaptable approach that takes into account the congestion status of other users and shifts in traffic distribution. The present invention can more effectively manage congestion and optimize network performance over time.

BRIEF DESCRIPTION OF THE DRAWINGS

Other features and advantages of the present invention will appear in the description hereinafter, in reference to the appended drawings, where:

Figure 1 illustrate an Intelligent Transportation System (ITS) implementing the method according to the present invention

Figure 2a and 2b are flowcharts of exemplary embodiments according to the present invention respectively illustrating machine learning model training for dynamically configuring DCC look-up table at an individual RSU and federated learning to update the trained machine learning models of different RSUs.

Figure 3 illustrates block diagram of RSU assistance for coordinated DCC: machine learning for heterogeneous traffic flow clustering and per traffic flow cluster learning of CBR measure vs N_neigbor relationship.

Figure 4 illustrates resource pool at the TX UE for evaluation of its CBR measure vs N_neigbor relationship.

Figure 5 illustrates an example of federated learning according to the present invention.

Figure 6 illustrates per cluster N_neigbor estimation model parameter local training for RSU i in federated learning.

DESCRIPTION OF EMBODIMENTS

As discussed above, the present invention proposes a method to dynamically configure the look-up table that will be used for the DCC for each transmitter user equipment (TX UE) in the vicinity (coverage) of the RSU with the help of RSU constantly monitoring the traffic condition in the deployment area. The optimal dynamic look-up table is obtained through machine-learning to parameterize a neural network at each RSU. And multiple RSUs in the system are connected to a centralized parameter server, which is able to aggregate the neural network parameterization model that is trained at each RSU and provide an updated model to each RSU in a federated learning manner. In this way, the overall system performance in terms of the packet reception ratio is improved for all the TX UEs implementing a DCC mechanism.

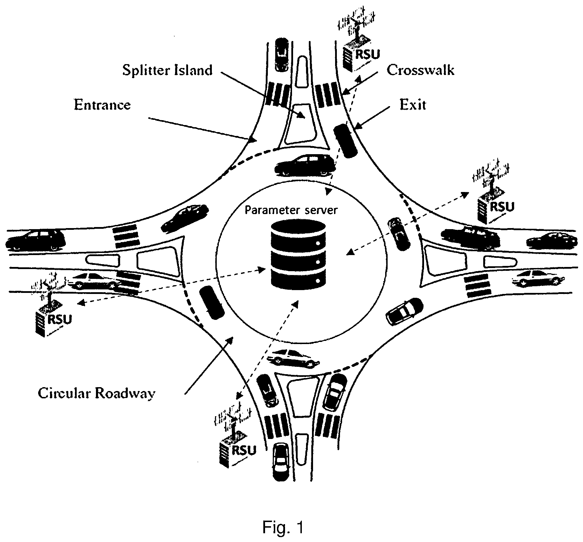

Figure 1 shows an Intelligent Transportation System (ITS) scenario implementing the method according to the present invention embodiment. The Intelligent Transportation System (ITS) uses information and communication technologies to improve the safety, efficiency, and overall performance of transportation networks. It includes RSUs, TX UEs (such as vehicles), which use various communication modes like Vehicle-to-Vehicle (V2V) and Vehicle-to-Infrastructure (V2I) communication for example based on the NR V2X sidelink mode 2.

In such a scenario, RSUs are stationary infrastructure components that serve as communication hubs within the ITS. They are typically installed along roads, at intersections, or in other strategic locations to facilitate Vehicle-to-infrastructure (V2I) communication. RSUs can collect and process data from various sources, such as traffic sensors, cameras, or connected vehicles, and use this information to make decisions or issue commands to help manage traffic, optimize signal timings, or respond to incidents.

TX UEs are mobile devices or vehicles equipped with communication modules that enable them to participate in the ITS. These TX UEs can exchange information with each other and with RSUs using Vehicle-to-Vehicle (V2V) and V2I communication, respectively. They can share data such as their location, speed, direction, or other relevant information, enabling cooperative decision-making and enhancing situational awareness for all connected road users. V2V communication allows vehicles to communicate directly with each other, exchanging safety-critical information, and enabling cooperative behaviors such as collision avoidance, platooning, or lane change assistance. This direct communication can help prevent accidents, improve traffic flow, and increase overall road safety. V2I communication connects vehicles to the transportation infrastructure, allowing them to receive real-time traffic updates, road condition information, or other pertinent data from RSUs. This communication can help vehicles make informed routing decisions, optimize fuel consumption, and contribute to a more efficient transportation system.

In the present invention, RSUs are adapted to monitor what is happening in its vicinity over the sidelink channels using sidelink communication (RSU decodes the 1st stage SCI), such as NR V2X sidelink mode 2. For RSUs to vehicle signaling, for example, to configure the lookup table, any type of communication (Uu link, sidelink PC5, wifi, etc...) can be implemented. In addition, all the RSUs are connected to a parameter server which is used for the federated learning model parameter aggregation and update diffusion. The link between RSU and the parameter server can be either a wired backhaul connection (optical fiber, copper lines, etc) or a wireless backhaul connection.

More particularly, the ITS as shown in Figure 1 comprises a system for configuring a look-up table for decentralized congestion control (DCC) of a network comprising at least two RSUs (such as three RSU in Figure 1) and, in the vicinity of each RSU, a plurality of TX UEs (vehicles) capable of communicating with respective RSU and using the look-up table to implement decentralize congestion control, and a parameter server (PS) connecting the RSUs,

wherein the RSUs are configured to:

- monitor sidelink traffic conditions in the vicinity of each RSU;

- train a machine learning model for each RSU;

wherein the parameter server is configured to:

- aggregate the machine learning models;

- update the machine learning models;

wherein the RSUs are further configured to:

- dynamically configure a look-up table for a targeted TX UE in the TX UEs based on the monitored sidelink traffic conditions and the updated machine learning models.

Once the look-up table is configured, it is possible to implement decentralize congestion control DCC based on the configured look-up table by means of various approaches in the art.

More details of the methods of dynamically configuring a look-up table for decentralized congestion control (DCC) according to the present invention will be discussed below.

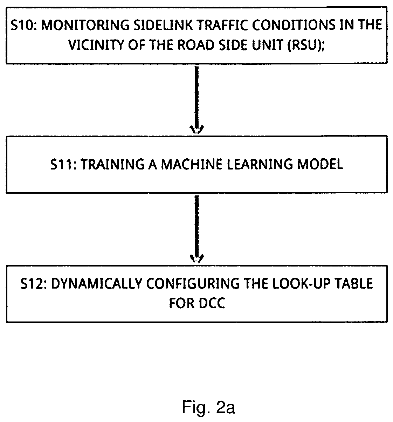

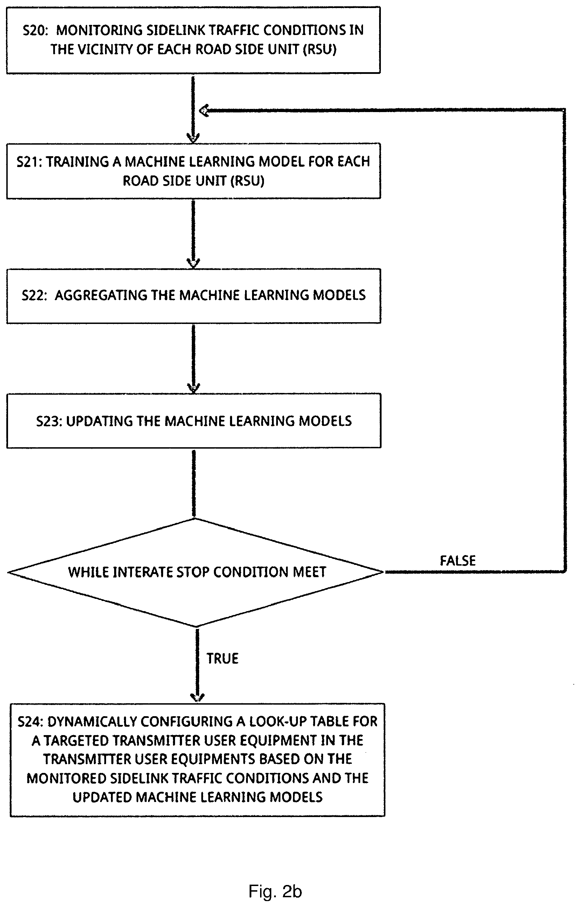

Figure 2a and 2b are flowcharts of exemplary embodiments according to the present invention illustrating machine learning model training at two local RSUs for dynamically configuring DCC look-up table and federated learning to update the trained machine learning models by means of Parameter Server.

Figure 2a shows a look-up table for decentralized congestion control (DCC) of a network comprising a RSU and a plurality of TX UEs capable of communicating with the RSU and using the look-up table to implement decentralize congestion control for sidelink communication of the TX UE. The method comprises:

- (S10) monitoring sidelink traffic conditions in the vicinity of the RSU;

- (S11) training a machine learning model; and

- (S12) dynamically configuring the look-up table for a targeted TX UE in the TX UEs based on the monitored sidelink traffic conditions and the trained machine learning model.

As an example, the machine learning model is trained to estimate a number of TX UEs performing sidelink transmission in the neighborhood of the targeted TX UE, wherein the neighorhood is an area in which the targeted TX UE is adapted to communicate with other TX UEs through sidelink communication, and such an area is determined by factors such as communication range, device density, network topology, application requirements, and real-time network conditions.

Moreover, the look-up table for the targeted TX UE is configured based a limit of Channel Resource utilization ($CR_{limit}$) calculated by the following equation (Eq. 1):

$$CR_{limit} = \frac{CBR_{measured}}{N_{neigbor}} \quad (\text{Eq.1})$$

wherein $CBR_{measured}$ is a measured sidelink Channel Busy Ratio of the targeted TX UE, $N_{neigbor}$ is the number of TX UEs performing sidelink transmission in the neighborhood of the targeted TX UE.

Figure 2b further shows a method for configuring a look-up table for decentralized congestion control (DCC) of a network comprising at least two RSUs and, in the vicinity of each RSU, a plurality of TX UEs capable of communicating with respective RSU and using the look-up table to implement decentralize congestion control for sidelink communication of the TX UEs, and a parameter server (PS) connecting the RSUs. The method is based on federated learning procedure and comprises the following steps:

- (S20) monitoring sidelink traffic conditions in the vicinity of each RSU;

- (S21) training a machine learning model for each RSU;

- (S22) aggregating the machine learning models;

- (S23) updating the machine learning models, when predefined iterative conditions are met, a following step will be proceeded, if not, it will go back to step S20 and repeat the above steps S21 to S23, wherein the predefined conditions, for example, comprise maximum iteration number, model convergence speed, maximum execution time, or model accuracy; and

- (S24) dynamically configuring a look-up table for a targeted TX UE in the TX UEs based on the monitored sidelink traffic conditions and the updated machine learning models.

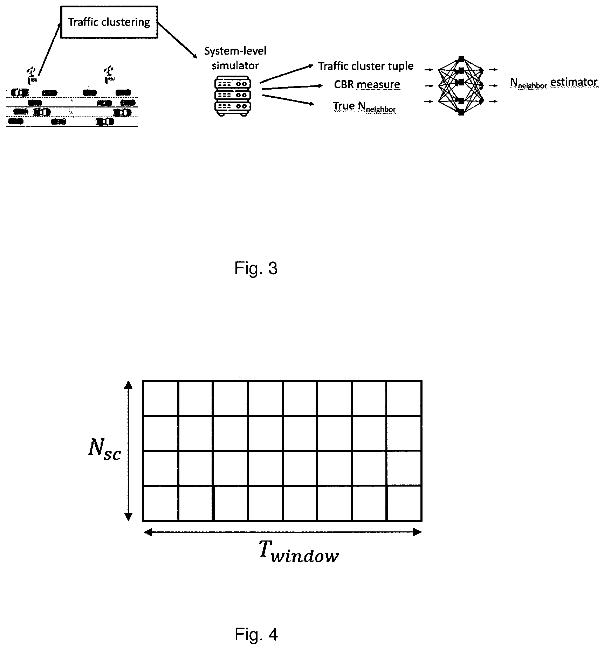

Now referring to Figure 3, it is shown an embodiment of training machine learning model according to the present invention, particularly relating to machine learning for heterogeneous traffic clustering and per traffic cluster type learning of *CBR measure* vs $N_{neigbor}$ relationship.

In this embodiment as shown in Figure 3, the present invention first proposes an offline training algorithm of machine learning for RSU-assisted coordinated DCC. To simplify the elaboration, assume that all the messages that are sent by TX UEs are in the broadcast mode. The RSU will obtain the data of sidelink resource reservation in the deployment in a continuous manner in time. This is done by RSU sensing the sidelink resource pool by decoding the 1st stage sidelink control information (SCI) in the physical sidelink control channel (PSCCH). In the 1st stage SCI, the RSU can obtain the following information regarding the traffic associated with the reservation: the RRI of the traffic (if the traffic is periodic and semi-persistent scheduling is applied), the frequency resources such as the number of sub-channels of the PSSCH carrying the current (re)transmission of a transport block (TB), the number of reservations of (re-)transmission in an RRI.

In a first step of the machine learning, with constant monitoring of the sidelink traffic reservation in time, the RSU can first classify the traffic flows into different clusters according to following attributes: RRIs, the number of (re-)transmission $N_{transmission}$, and the number of sub-channels occupied for a TB $L_{subchannel}$. If there is a priori information for presented total traffic cluster number, conventional machine learning algorithms such as k-mean clustering or probabilistic clustering method such as the expectation maximization clustering algorithm can be used to cluster traffic flows with similar characteristics for sidelink communication. If there is no a priori information on the total number of clusters, we can assume k=1,2,3,...,K clusters and then evaluate the fit with hold-out data or cross-validation method. In addition to the traffic cluster, the probability of the presence of each cluster of traffics over the entire mixed traffics will also be calculated once the traffic flow clustering is performed.

When the traffic flow behavior clustering is done and the probability of the presence of each cluster of traffic over the entire mixed traffics is calculated, we can generate synthetic data sets of TX UE following tuple of distribution parameters in a system level simulation ($RRI_k$, $N_{transmission,k}$, $L_{subchannel,k}$, $Pr_k$), $\sum_k Pr_k = 1$. More specifically, this is done by random dropping $N_{tot} \cdot Pr_k$ TX UEs with traffic characteristics as ($RRI_k$, $N_{transmission,k}$, $L_{subchannel,k}$) and calculate the CBR measure and associated true $N_{neigbor}$ for each TX UE in a system-level simulation, such as a digital twin of the real-world implementation.

The system level simulation digital twin is a software implementation of its real-world counterpart (the physical twin). The deployment scenario of the RSU, the geometry of the environment in the system level simulation is the same as the real-world implementation. The sidelink communication channel model in the system level simulation is calibrated to have the same statistical channel behavior as the real-world implementation. With the system level simulation, the sidelink transmission behaviors of multiple simultaneous TX UEs transmissions can be correctly simulated. Estimation of the number of neighborhood UE, which is quite difficult in real-world implementation, can also be easily achieved in the system level simulation.

A second step of the machine learning is to train respective machine learning sub-models for each traffic cluster with tuple of distribution parameters ($RRI_k$, $N_{transmission,k}$, $L_{subchannel,k}$, $Pr_k$) to find the best function approximation of the $N_{neigbor}$ of any TX UE given its CBR measure. More precisely, based on the system level simulation, at each TX UE we can calculate the CBR measure and the true $N_{neigbor}$ measure for a given observation window $T_{window}$. Assuming that the sidelink resource pool observed at said TX UE consists of $N_{sc}$ subchannels and $T_{window}/T_{slot}$ slots (see Figure. 4). With the system-level simulation, at said TX UE k we can simulate the CBR measure $CBR_k$ based on the following equation Eq.2:

$$CBR_{measure,k}(T_{window}) = \frac{\sum_{i=1}^{N_{sc}} \sum_{j=1}^{T_{window}/T_{slot}} 1(RSSI_{i,j} > P_{CBR-th})}{N_{sc} \times T_{window}/T_{slot}} \quad \text{(Eq.2)}$$

Where $RSSI_{i,j} = \sum_{m, m \in \{\text{UEs transmit at resource }(i,j)\}} P_{m,k}$ is the sum of received power from all the other transmitting TX UE m who transmits at the sidelink resource grid (i,j) to said TX UE k. $P_{CBR-th}$ is a (pre-)configured threshold, if the sum of receiving power from other TX UEs at the sidelink resource grid (i,j) exceeds the threshold, this sidelink resource grid is considered to be occupied. The above equation will loop over each sidelink resource grid as shown in Figure 4 to count and cumulate the total number of occupied sidelink resource over all resource grids. Therefore, the above expression is a measurement of CBR at TX UE k for a given window $T_{window}$. With the system-level simulation, we can also calculate the true number of actively transmitting TX UE in the neigborhood of TX UE k with the following equation Eq.3:

$$N_{neighbor,k}(T_{window}) = card(unique([\cup_{i=1}^{N_{sc}} \cup_{j=1}^{T_{window}/T_{slot}} 1(P_{m,k} > P_{SCI\,decode-th}) \cdot m]))\,,$$

(Eq.3)

where $m \in$ {UEs transmit at resource (i,j)}. The above equation loops over the all the resource grids defined by the sidelink resource pool in Figure 4. It tests whether a TX UE m is transmitting in sidelink to said TX UE k in resource grid (i,j) with the received power $P_{m,k}$ is larger than a predefined 1st stage SCI decode threshold $P_{SCI\,decode-th}$. If it is the case, the index m of the said TX UE is added to the actively transmitting TX UE set. After looping over all the sidelink resources and applying a unique operation to remove duplicated TX UE indices from the actively transmitting TX UE set, a cardinality operation is applied on the actively transmitting TX UE set to obtain the true number of actively transmitting TX UE in the neigborhood of TX UE k for a given window $T_{window}$.

In the real-world implementation, the neighborhood number is a hidden parameter for each TX UE that can only be roughly estimated. Estimation methods include (1) geographic distance based algorithm, such as counting the number of entries in the network layer location table, or (2) sidelink received signal strength indicator (RSSI) based algorithm, such as letting TX UE measure the RSSI on each subchannel to identify if it is occupied and estimate the number of active neighborhood TX UE accordingly. However, since it is a signal strength, the TX UE cannot know who is the source of this signal. In addition, this signal can be multiple transmitters transmitting at the same time and the received power is additive, therefore the TX UE cannot separate the sources. Beside the above difficulties, there is another fact that renders the neighborhood number estimation difficult: the heterogenous traffic conditions in the system. Due to the fact that the sidelink traffics in a 5G NR V2X system can be very heterogenous and DCC is not a mechanism to optimize the performance of one user but a mechanism to optimize the performance of a system with many users, the neighborhood number estimation is highly dependent on the sidelink traffic conditions in the vicinity of the targeted TX UE.

It should be noticed that in a real world system the calculation of the true number of actively transmitting TX UE as (Eq.2) is not possible. This is because if there are multiple TX UEs transmitting to TX UE k at the same resource grid (l,j), the TX UE k cannot distinguish the received power $P_{m,k}$ from each TX UE m, it can only measure the sum of power which is the $RSSI_{i,j}$ as defined in (Eq.1). Therefore, the true *CBR measure* vs $N_{neigbor}$ relationship is a hidden function which can only be evaluated through the system level simulation, in which the TX UE k is assumed to be a 'genie' and we can simulate separately the received power $P_{m,k}$ even for all the TX UE m transmitting on the same resource grid (i,j).

Since in the digital twin we can not only simulate sidelink signal strength received for each pair of communicating device, but also correctly identify the source of TX UE occupying each subchannel, we can therefore correctly estimate the neighborhood number according to the CBR measure and the sidelink traffic conditions. Thus, with the RSU monitoring and the traffic clustering in the physical twin, we can abstract the traffic conditions with associated distribution, and then switch to the digital twin to generate synthetic data. The synthetic data can be used to train the neighborhood number estimation model. Since the system level simulator have maintained the statistical property of the real-word system which is important for the DCC lookup table design, this digital twin synthetic data based training can decrease the model training complexity and at the same time increase the model accuracy.

After the second step, we have derived a trained machine learning model (trained neural network) which comprises sub-models for different cluster and can provide the estimation $N_{neigbor}$ of a targeted TX UE according to the cluster that this TX UE's traffic flow belongs to, for example, based on the similarity of the traffic characteristics of this TX UE and the cluster (sub-model). This trained neural network is stored at RSU, based on the neural network and the traffic flow cluster tuple ($RRI_k$, $N_{transmission,k}$, $L_{subchannel,k}$, $Pr_k$), RSU can configure each TX UE's lookup table dynamically according to the flow cluster it belongs to. An example of the lookup table for a TX UE with traffic flow in cluster k can be: when $a < CBR_{measured} < b$, $CR_{limit} = \dfrac{CBR_{measured}}{f_k(\frac{a+b}{2})}$ , where $f_k(\frac{a+b}{2})$ is the estimation $N_{neigbor}$ of cluster k flow applying $CBR_{measured} = \dfrac{a+b}{2}$ as input for the corresponding neural network.

An embodiment of a system applying the above offline training based RSU assistance for coordinated DCC is described below. Assume that RSU monitors the sidelink resource allocation in a highway environment, during the peak hours and off-peak hours the traffic flows distributions are quite different. In addition, during the night, there might have more platoon of trucks and the sidelink communication traffic flow distribution is distinct from those in the day. Therefore, it is possible to extract the RSU monitoring data in different time slots in a day and use the above offline trained machine learning model (with sub-models for each cluster) to calculate the suitable DCC lookup table for each flow cluster in each time slot in a day. The RSU can broadcast this lookup table to the TX UE in its coverage and update the DCC lookup table according to current time.

It should be noted that in the above embodiment the clustering is to aggregate similar traffic configurations and accelerate the model training (i.e. training sub-model for each cluster), and it can also help us to understand which traffic characteristics attributes are more relevant such that if we use them to cluster similar traffic and train the neural network accordingly, we can get a good result. However, the clustering is not a necessary step, and it is possible to skip the clustering step and train the model directly based on the traffic characteristics attributes, which mean there is no clustering step needed.

The abovementioned scheme already outperforms the (pre-)configured DCC lookup table in 3GPP because the traffic flow distribution and the distribution evolution in time have been considered.

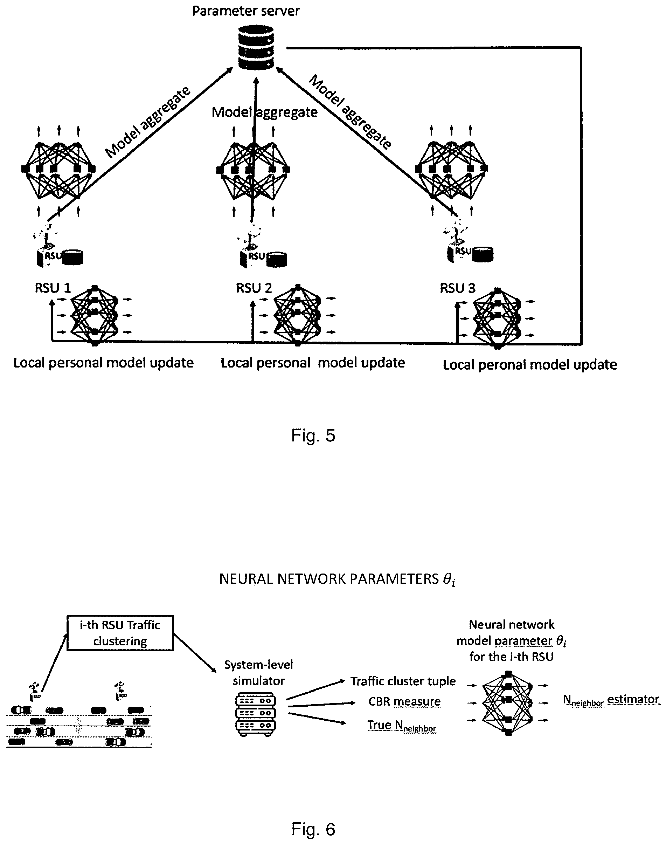

Now referring to Figure 5, it is shown an embodiment of federated learning based coordinated DCC among 3 RSUs according to the present invention.

After training a machine learning model used for dynamically configuring the DCC lookup table for TX UEs in one RUS's coverage as discussed above. The present invention further improves the scheme using a federated learning based coordinated DCC with multiple RSUs' assistance. This is especially useful for a scenario where there are more than two RSUs. Because previous training procedure is based on an offline training with dataset generated via the system level simulation and according to given traffic mixture distribution tuples $(RRI_k, N_{transmission,k}, L_{subchannel,k}, Pr_k)$, $\sum_k Pr_k = 1$ for an individual RSU, therefore for another RSU who proceeds the same step 1 traffic flow clustering as discussed above and who has a different traffic mixture composition, all these RSUs have to generate synthetic data according to their distribution and perform the second step training individually.

Such individual training at different RSU is inefficient. First of all, if both RSU has observed the same traffic mixture, it is obvious that the per cluster $N_{neigbor}$ estimation model should be identical at the two RSUs and it is therefore possible to use federated learning to refine the model precision and accelerate the convergence speed for the training of neural network carrying out per cluster $N_{neigbor}$ estimation. Even if the traffic mixture distributions are different at the two RSUs, it is still possible to leverage the resemblance of observed traffic mixture distribution at the different RSUs and apply an RSU-centric federated learning between the different RSUs. In another word, the present invention proposes to apply an RSU-centric federated learning to let them collaborate while considering their discrepancy in traffic mixture distribution, in this way a potential negative transfer due to the traffic mixture distribution divergence can be avoided.

Therefore, the present invention proposes a federated learning based RSU assisted coordinated DCC approach. The architecture is based on a conventional federated learning architecture illustrated in Figure 5 when there are, for example, 3 RSUs participating in the federated learning.

According to the embodiment as shown in Figure 5, the federated learning may comprises the following steps:

1. Model parameters initialization $\theta$ and dissemination by aggregation server (parameter server)

2. Local nodes perform training based on local datasets: $\theta_i \leftarrow$ ClientUpdate$(\theta, i)$

3. Local nodes upload model for aggregation

$$\theta_i^t \leftarrow \sum_{j=1}^{N} w_{i,j} \theta_j^{t-1/2}$$

4. AS aggregates the updates and sends back a new model to local nodes

5. Local nodes update the model and iterate.

In a distributed system with $N$ RSUs, each endowed with a dataset $D_i$ of $n_i$ samples from a local distribution $P_i$ = $\{(RRI_{i_k}, N_{transmission,i_k}, L_{subchannel,i_k}, Pr_{i_k}), \sum_{k=1}^{K} Pr_{i_k} = 1\}$, the goal is to find the predictor $f_k(x, \theta_i) : X \to \hat{Y}$ from an hypothesis class $\mathcal{F}$ that minimizes

$$L(f_k, \vec{w}) = \sum_{i=1}^{N} \frac{w_{i,j}}{n_i} \sum_{(x,y) \in D_i} \ell(f_k(x, \theta_i), y) \qquad \text{(Eq. 4)}$$

Where $\ell : \hat{Y} \times Y \to \mathbb{R}^+$ is a loss function and $\vec{w_i} = (w_{i,1}, ..., w_{i,N})$ is a weighting scheme for RSU $i$.

The local training step that each RSU performs is the same as those two steps as discussed above. Let the flow mixture distribution obtain at RSU $i$ after the first step clustering is denoted as: $(RRI_{i_k}, N_{\text{transmission},i_k}, L_{\text{subchannel},i_k}, Pr_{i_k})$, $\sum_{k=1}^{K} Pr_{i_k} = 1$, where RSU $i$ has $i_K$ traffic flow clusters in total and the tuple for cluster $i_k$ is $(RRI_{i_k}, N_{\text{transmission},i_k}, L_{\text{subchannel},i_k}, Pr_{i_k})$.

The per cluster $N_{neigbor}$ estimation model parameter local training for RSU $i$ is further shown in Figure 6, wherein similar training approach as the one in Figure 3 is implemented.

Different from conventional federated learning algorithm where the distributed nodes have data set which is drawn from an identical distribution, here in our case the flow mixture distribution $(RRI_{i_k}, N_{\text{transmission},i_k}, L_{\text{subchannel},i_k}, P_{rik})$, $\sum_{k=1}^{K} Pr_{i_k} = 1$ can be different among different RSUs. Therefore, we here introduced the RSU related weighting scheme $\vec{w_i} = (w_{i,1}, ..., w_{i,N})$. For each of the coefficient $w_{i,j}$, it should be carefully selected such that there is no negative transfer due to the distribution discrepancy between different RSUs and different clusters. Therefore, the RSU specific weight $\vec{w_i}$ can be written as a function of a data distribution distance metric and the data set sizes difference.

$$w_{i,j} = \frac{\frac{n_j}{n_i}}{D_{KL}(P_i \| P_j)} / \left( \sum_{j=1}^{N} \frac{\frac{n_j}{n_i}}{D_{KL}(P_i \| P_j)} \right)$$

One example of the $w_{i,j}$ can be, where $D_{KL}(P_i \| P_j)$ is the Kullback-Leibler divergence between the two distributions.

$$w_{i,j} = \frac{\frac{n_j}{n_i}}{D_{JS}(P_i \| P_j)} / \left( \sum_{j=1}^{N} \frac{\frac{n_j}{n_i}}{D_{JS}(P_i \| P_j)} \right)$$

Another example of the $w_{i,j}$ can be, where $D_{JS}(P_i \| P_j)$ is the Jensen-Shanon divergence between the two distributions.

Another example of the $w_{i,j}$ can be:

$$w_{i,j} = \frac{\frac{n_j}{n_i} e^{-\frac{1}{2\sigma_i \sigma_j} \Delta_{i,j}(\hat{\theta})}}{\sum_{j'=1}^{N} \frac{n_{j'}}{n_i} e^{-\frac{1}{2\sigma_i \sigma_{j'}} \Delta_{i,j'}(\hat{\theta})}}, \forall j = 1, ..., N$$

Where

$$\Delta_{i,j}(\hat{\theta}) = \left\| \frac{1}{n_i} \sum_{(x,y) \in \mathcal{D}_i} \nabla \ell(f_{\hat{\theta}}, y) - \frac{1}{n_j} \sum_{(x,y) \in \mathcal{D}_j} \nabla \ell(f_{\hat{\theta}}, y) \right\|^2$$

$$\approx \left\| \mathbb{E}_{z \sim P_i} \nabla \ell(f_{\hat{\theta}}, y) - \mathbb{E}_{z \sim P_j} \nabla \ell(f_{\hat{\theta}}, y) \right\|^2$$

The mixture coefficients are calculated at the PS during a special round prior to federated training. During this round, the PS broadcasts a common model denoted $\hat{\theta}$ to the users, which compute the full gradient on their local datasets. At the same time, each node $i$ locally estimates the value $\sigma_i^2$ partitioning the local data in U mini batches $\{\mathcal{D}_i^u\}_{u=1}^U$ of size $n_u$ and computing

$$\sigma_i^2 = \frac{1}{U} \sum_{u=1}^{U} \left\| \frac{1}{n_u} \sum_{(x,y)\in\mathcal{D}_i^u} \nabla\ell(f_{\hat{\theta}},y) - \frac{1}{n_i} \sum_{(x,y)\in\mathcal{D}_i} \nabla\ell(f_{\hat{\theta}},y) \right\|^2$$

where $\sigma_i^2$ is an estimate of the gradient variance computed over local datasets $\mathcal{D}_i^u$ sampled from the same target distribution.

In the multiple RSU model aggregation and update phase, each RSU will update it local model according to the following set of user-centric aggregation steps at the aggregation server (parameter server):

$$\theta_i^t \leftarrow \sum_{j=1}^{N} w_{i,j}\theta_j^{t-1/2} \quad \forall i = 1, \ldots, N$$

where $\theta_j^{t-1/2}$ is the locally optimized model at node $j$ starting from $\theta_j^{t-1}$, and $\theta_j^{t-1}$ is the user-centric aggregated model for user $j$ at communication round $t$ - 1.

In view of above, the present invention proposes a method to dynamically configure the look-up table that will be used for the DCC for each TX UE with the help of RSU constantly monitoring the traffic condition in the deployment area. The optimal dynamic look-up table is obtained through a machine-learning algorithm to parameterize a neural network at each RSU. And multiple RSUs in the system are connected to a centralized parameter server, which is able to aggregate the neural network parameterization model that is trained at each RSU and provide an updated model to each RSU in a federated learning manner. In this way, the overall system performance in terms of the packet reception ratio is improved for all the TX UEs implementing a DCC mechanism.

More particular, the local neural network of the machine learning model trained at each RSU will take the sidelink resource pool reservations monitored at the RSU for each predefined observation window as input training data. The neural network will classify the traffics into different categories and provide as output the estimation relation of the CBR measurement as a function of the active transmitting neighborhood node number for each traffic category. With such information provided by RSU, each TX UE can estimate accurately the number of active transmitting UEs in its neighborhood and construct a dynamic look-up table that is suitable for the current traffic characteristics.

In addition, the present invention is also different from a conventional federated learning procedure, since the sidelink resource pool monitoring at each RSU may observe different heterogeneous traffic mixtures due to different vehicle densities and different V2X applications in different locations. When the RSUs interact with the parameter server to update the local learning model, such kind of traffic mixture discrepancies are considered in the federation procedure to make the distributed cooperation useful and efficient. In another word, the RSUs in the federated learning according to the present invention will consider different traffic mixture distributions at other RSUs and construct a personalized local update model to guarantee a positive transfer during the aggregation and parameter server model update.

It is known to those skilled in the art, the aforementioned examples described above, according to the present invention, can be implemented in many ways, such as program instructions for execution by a processor, as software modules, microcode, as computer program product on computer readable media, as logic circuits, as application specific integrated circuits, as firmware, etc. The embodiments of the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the embodiments of the invention can take the form of a computer program product accessible from a computer-usable or computer-readable medium providing program code for use by or in connection with a computer, processing device, or any instruction execution system. For the purposes of this description, a computer-usable or computer readable medium can be any apparatus that can contain, store, communicate, or transport the program for use by or in connection with the instruction execution system, apparatus, or device. The medium can be electronic, magnetic, optical, or a semiconductor system (or apparatus or device). Examples of a computer-readable medium include, but are not limited to, a semiconductor or solid state memory, magnetic tape, a removable computer diskette, a RAM, a read-only memory (ROM), a rigid magnetic disk, an optical disk, etc. Current examples of optical disks include compact disk-read-only memory (CD-ROM), compact disk-read/write (CD-R/W) and DVD.

The embodiments described hereinabove are illustrations of this invention. Various modifications can be made to them without leaving the scope of the invention which stems from the annexed claims.

**Claims**

1. A method for configuring a look-up table for decentralized congestion control (DCC) of a network comprising a road side unit, RSU, and a plurality of transmitter user equipments, TX UEs, capable of communicating with the RSU and using the look-up table to implement decentralize congestion control for sidelink communication of the TX UE, comprising:

   - monitoring sidelink traffic conditions in the vicinity of the RSU;
   - training a machine learning model; and
   - dynamically configuring the look-up table for a targeted TX UE in the TX UEs based on the monitored sidelink traffic conditions and the trained machine learning model.

2. The method according to claim 1, wherein the sidelink communication is based on NR V2X sidelink mode 2.

3. The method according to any one of claims 1 and 2, wherein the machine learning model is trained to estimate a number of TX UEs performing sidelink transmission in the neighborhood of the targeted TX UE, wherein the neighorhood is an area in which the targeted TX UE is adapted to communicate with other TX UEs through sidelink communication, and

   the look-up table for the targeted TX UE is configured based a limit of Channel Resource utilization ($CR_{limit}$) calculated by the following equation (Eq. 1):

$$CR_{limit} = \frac{CBR_{measured}}{N_{neigbor}} \quad (\text{Eq.1})$$

   where $CBR_{measured}$ is a measured sidelink Channel Busy Ratio of the targeted TX UE, $N_{neigbor}$ is the number of TX UEs performing sidelink transmission in the neighborhood of the targeted TX UE.

4. The method according to claim 3, wherein the method further comprises:

   - classifying the monitored sidelink traffic conditions into a plurality of traffic clusters, where each traffic cluster comprises a plurality of traffic with similar traffic characteristic attributes;
   - generating synthetic data of TX UEs preforming sidelink communication based on the plurality of traffic clusters; and
   - training the machine learning model using the synthetic data as training data.

5. The method according to claim 4, wherein the plurality of traffic clusters are classified by K-mean clustering or probabilistic clustering method.

6. The method according to claim 4, wherein the plurality of traffic clusters are classified according to following traffic characteristic attributes: Resource Reservation Interval (RRIs), the number of (re-)transmission ($N_{transmission}$), and the number of sub-channels occupied for a transport block ($L_{subchannel}$).

7. The method according to claim 4, wherein the synthetic data of TX UEs preforming sidelink communication comprise traffic cluster tuple for each TX UE that its traffic belongs to, wherein each traffic cluster tuple comprises Resource Reservation Interval (RRI), number of (re-)transmission ($N_{transmission}$), subchannel occupation for this TX UE for each reservation ($L_{subchannel}$), the probability (Pr) of the traffic type that this TX UE belongs to.

8. The method according to claim 4, wherein the synthetic data comprise Channel Busy Ratio (CBR) of the targeted TX UE and the number of TX UEs performing sidelink transmission in the neighborhood of the targeted TX UE.

9. The method according to claim 4, wherein the synthetic data is generated by a system level simulation, which is a digital twin of the real-world implementation.

10. A method for configuring a look-up table for decentralized congestion control (DCC) of a network comprising at least two RSUs and, in the vicinity of each RSU, a plurality of TX UEs capable of communicating with respective RSU and using the look-up table to implement decentralize congestion control for sidelink communication of the TX UEs, and a parameter server (PS) connecting the RSUs, comprising:

- monitoring sidelink traffic conditions in the vicinity of each RSU;
- training a machine learning model for each RSU;
- aggregating the machine learning models;
- updating the machine learning models; and
- dynamically configuring a look-up table for a targeted TX UE in the TX UEs based on the monitored sidelink traffic conditions and the updated machine learning models.

11. The method according to claim 10, wherein the step of updating the machine learning models is iterated until a predefined condition is met.

12. The method according to claim 11, wherein the predefined condition comprises:

- maximum iteration number,
- model convergence speed,
- maximum execution time, or
- model accuracy.

13. A system for configuring a look-up table for decentralized congestion control (DCC) of a network comprising at least two RSUs and, in the vicinity of each RSU, a plurality of TX UEs capable of communicating with respective RSU and using the look-up table to implement decentralize congestion control, and a parameter server (PS) connecting the RSUs,

wherein the RSUs are configured to:

- monitor sidelink traffic conditions in the vicinity of each RSU;
- train a machine learning model for each RSU;

wherein the parameter server is configured to:

- aggregate the machine learning models;
- update the machine learning models;

wherein the RSUs are further configured to:

- dynamically configure a look-up table for a targeted TX UE in the TX UEs based on the monitored sidelink traffic conditions and the updated machine learning models.

14. A decentralized congestion control method for a network comprising at least one RSU and a plurality of TX UEs capable of communicating with each other through a sidelink communication, comprising:

- using the look-up table configured by a method according to claims 1 to 12 implement decentralize congestion control.

15. A computer program comprising instructions which, when the program is executed by a computer, cause the computer to carry out the method of claim 1.

Fig. 1

S10: MONITORING SIDELINK TRAFFIC CONDITIONS IN THE VICINITY OF THE ROAD SIDE UNIT (RSU);

S11: TRAINING A MACHINE LEARNING MODEL

S12: DYNAMICALLY CONFIGURING THE LOOK-UP TABLE FOR DCC

Fig. 2a

S20: MONITORING SIDELINK TRAFFIC CONDITIONS IN
THE VICINITY OF EACH ROAD SIDE UNIT (RSU)

S21: TRAINING A MACHINE LEARNING MODEL FOR EACH
ROAD SIDE UNIT (RSU)

S22: AGGREGATING THE MACHINE LEARNING MODELS

S23: UPDATING THE MACHINE LEARNING MODELS

WHILE INTERATE STOP CONDITION MEET

FALSE

TRUE

S24: DYNAMICALLY CONFIGURING A LOOK-UP TABLE FOR
A TARGETED TRANSMITTER USER EQUIPMENT IN THE
TRANSMITTER USER EQUIPMENTS BASED ON THE
MONITORED SIDELINK TRAFFIC CONDITIONS AND THE
UPDATED MACHINE LEARNING MODELS

Fig. 2b

Traffic clustering

System-level
simulator

Traffic cluster tuple

CBR measure

True $N_{neighbor}$

$N_{neighbor}$ estimator

Fig. 3

$N_{sc}$

$T_{window}$

Fig. 4

Parameter server

RSU 1

Local personal model update

RSU 2

Local personal model update

RSU 3

Local peronal model update

Model aggregate

Model aggregate

Model aggregate

Fig. 5

NEURAL NETWORK PARAMETERS $\theta_i$

i-th RSU Traffic clustering

System-level simulator

Neural network model parameter $\theta_i$ for the i-th RSU

Traffic cluster tuple

CBR measure

True $N_{neighbor}$

$N_{neighbor}$ estimator

Fig. 6

Europäisches
Patentamt

European
Patent Office

Office européen
des brevets

# EUROPEAN SEARCH REPORT

Application Number

EP 23 31 5157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/274065 A1 (ZHAO YI [CN] ET AL) 5 September 2019 (2019-09-05) * figures 2,3 * * paragraph [0005] – paragraph [0015] * * paragraph [0059] – paragraph [0071] * * paragraph [0116] – paragraph [0143] * ----- | 1-15 | INV. H04W24/02 ADD. H04W24/08 H04W28/02 H04W72/02 |
| Y | KR 102 257 536 B1 (KOREA NATIONAL UNIV OF TRANSPORTATION INDUSTRY ACADEMIC COOPERATION FO) 31 May 2021 (2021-05-31) * paragraph [0006] – paragraph [0022] * * paragraph [0034] – paragraph [0075] * * paragraph [0097] – paragraph [0104] * ----- | 1-15 | H04W72/52 H04W76/14 H04W76/23 |
| A | KR 2022 0062755 A (KOREA NATIONAL UNIV OF TRANSPORTATION INDUSTRY ACADEMIC COOPERATION FO) 17 May 2022 (2022-05-17) * figures 1B,4 * * paragraph [0012] – paragraph [0028] * * paragraph [0049] – paragraph [0103] * ----- | 1-15 | |

TECHNICAL FIELDS
SEARCHED      (IPC)

H04W
H04L

The present search report has been drawn up for all claims

| Place of search | Date of completion of the search | Examiner |
|---|---|---|
| Munich | 19 October 2023 | Bösch, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 31 5157

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2023

| Patent document cited in search report | | Publication date | Patent family member(s) | | Publication date |
|---|---|---|---|---|---|
| US 2019274065 | A1 | 05-09-2019 | CN | 108024286 A | 11-05-2018 |
| | | | EP | 3520469 A1 | 07-08-2019 |
| | | | KR | 20190067805 A | 17-06-2019 |
| | | | US | 2019274065 A1 | 05-09-2019 |
| KR 102257536 | B1 | 31-05-2021 | NONE | | |
| KR 20220062755 | A | 17-05-2022 | NONE | | |

For more details about this annex : see Official Journal of the European Patent Office, No. 12/82